# DEMANDE DE BREVET EUROPEEN

(11) **EP 1 967 896 A1**
(43) Date de publication de la demande: **10.09.2008**
(21) Numéro de dépôt: 08156394.2
(22) Date de dépôt: 02.03.2005
(51) Int. Cl.: G02F 1/13, G02F 1/1345, G09G 3/36

(54) **Dispositif d'affichage matriciel électro-optique comportant un circuit de commande agencé sur une portion d'extrémité longitudinale du substrat et circuit de commande équipant ce dispositif**

(62) Demande divisionnaire de: 05004551.7
(71) Demandeur: EM Microelectronic-Marin SA, 2074 Marin (CH)
(72) Inventeur: Longa, Giovanni, 2000 Neuchâtel (CH); Fabrizio, Jérôme, 2000 Neuchâtel (CH); Hamm, Alain, 2523 Lignières (CH)
(74) Mandataire: Couillard, Yann Luc Raymond

(57) **Abrégé**

L'invention propose un circuit de commande (22) pour la réalisation d'un dispositif d'affichage (10) comportant des plages de connexion (26) distribuées sur un bord principal (40) et sur au moins un bord adjacent audit bord principal, lesdites plages de chaque bord étant destinées à adresser soit des segments (C) soit des communs (L) de la matrice (11) dudit dispositif d'affichage, ladite matrice comportant plus de segments (C) que de communs (L) caractérisé en ce qu'il comporte des moyens de sélection destinés à permettre l'inversion des adressages desdits bords afin d'obtenir un circuit de commande (22) unique adaptable à chaque dispositif d'affichage.

L'invention propose aussi un dispositif d'affichage (10) comportant un tel circuit de commande (22) qui est adapté en fonction de la configuration dudit dispositif d'affichage.

## Description

L'invention concerne un dispositif d'affichage matriciel électro-optique tel qu'une cellule à cristaux liquides (LCD) comportant une plaque de substrat globalement rectangulaire et un circuit de commande.

L'invention concerne en particulier un dispositif d'affichage du type « chip-on-glass », c'est-à-dire un dispositif dans lequel le circuit de commande est agencé directement sur une face de la plaque de substrat, et plus précisément du type qui est équipé d'un seul circuit de commande pour l'adressage des lignes et des colonnes.

Ce type de dispositif d'affichage est bien connu et est largement utilisé, en particulier dans les appareils électroniques portatifs tels que les téléphones portables, les montres, les télécommandes... Tous ces appareils tendent à se miniaturiser, de sorte que la surface d'encombrement du dispositif d'affichage peut être gênante. Ceci est particulièrement vrai dans le cas d'un dispositif d'affichage rectangulaire étroit dont la dimension longitudinale est plusieurs fois plus grande que la dimension transversale.

Un exemple de ce type de dispositif d'affichage est décrit et représenté dans le document US-A-2002/075,439.

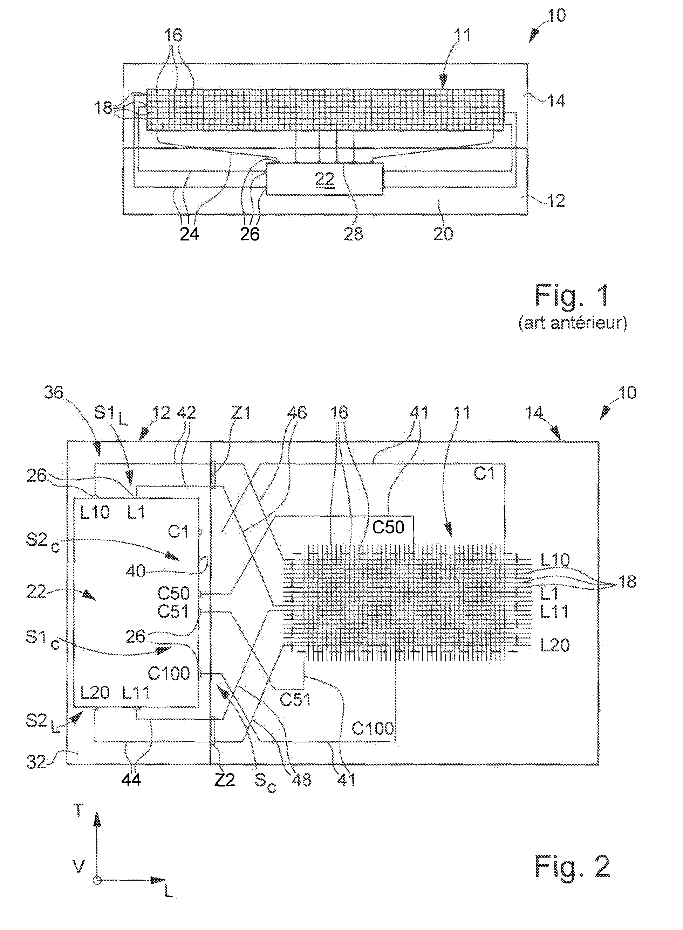

Un autre exemple est représenté schématiquement sur la figure 1 de la présente demande. Généralement, le dispositif d'affichage 10 comporte une plaque de substrat inférieure 12 sur laquelle est collée une plaque de substrat supérieure 14 de manière à emprisonner une couche de cristaux liquides. Les faces internes des deux plaques portent respectivement des électrodes transversales 16 formant les colonnes de la matrice 11 et des électrodes longitudinales 18 formant les lignes de la matrice 11. La matrice 11 constitue la zone d'affichage active du dispositif. La largeur transversale de la plaque inférieure 12 est plus importante que la largeur de la plaque supérieure 14 ce qui définit, sur la plaque inférieure 12, une portion d'extrémité transversale 20 non recouverte sur laquelle est fixé un circuit de commande 22. Des pistes conductrices 24 relient les plages de connexion 26 du circuit de commande 22 aux électrodes 16, 18 associées.

Pour minimiser la surface d'encombrement du dispositif d'affichage 10, les plages de connexion 26 agencées sur le bord principal 28 du circuit de commande 22, du côté de la matrice, sont raccordées aux électrodes les plus proches et les plus nombreuses, c'est-à-dire les électrodes transversales 16 qui forment ainsi les colonnes. Les autres plages de connexion 26 du circuit de commande 22 sont donc raccordées aux électrodes longitudinales 18 qui forment les lignes.

On note que les électrodes formant les lignes, adressées par des plages de connexion dédiées du circuit de commande, peuvent être désignées sous le terme de « communs», et les électrodes formant les colonnes, adressées par des plages de connexion dédiées du circuit de commande, peuvent être désignées sous le terme de « segments ».

Les circuits de commande sont conçus en fonction de ce mode de raccordement, c'est-à-dire que les plages de connexion situées sur le bord principal sont dédiées à l'adressage des colonnes, et les plages de connexion situées de part et d'autre du bord principal sont dédiées à l'adressage des lignes.

Ceci revêt une importance non négligeable car, du fait de la conception des signaux de commande, les circuits électroniques utilisés pour adresser une ligne, ou commun, doivent être beaucoup plus puissants que ceux utilisés pour adresser une colonne, ou segment. Le circuit de commande est donc choisi en fonction du nombre de lignes qu'il est capable d'adresser, de manière à minimiser sa complexité, son coût, et sa consommation.

Toutefois, certaines nouvelles applications nécessitant des dispositifs d'affichage particulièrement étroits transversalement imposent le montage du circuit de commande à l'extrémité longitudinale du dispositif d'affichage. Les plages de connexion adressant les colonnes sont alors raccordées aux électrodes longitudinales, et les plages de connexion adressant les lignes sont raccordées aux électrodes transversales.

Ce type de montage est coûteux car, comme le nombre d'électrodes transversales est beaucoup plus important que le nombre d'électrodes longitudinales, le circuit de commande doit être surdimensionné, c'est-à-dire comporter un grand nombre de plages de connexion dédiées à l'adressage des lignes, ce qui laisse un nombre important de plages de connexion dédiées à l'adressage des colonnes inutilisées. La surface de silicium nécessaire pour réaliser ce circuit de commande est plus importante donc, en plus du coût plus important, cela entraîne un encombrement du circuit supérieur.

L'invention vise à remédier à ces inconvénients en proposant un dispositif d'affichage présentant une surface d'encombrement réduite tout en minimisant son prix de revient. De plus, l'invention propose un circuit de commande unique adaptable à chaque dispositif d'affichage.

Dans ce but, l'invention propose un circuit de commande pour la réalisation d'un dispositif d'affichage comportant des plages de connexion distribuées sur un bord principal et sur au moins un bord adjacent audit bord principal, lesdites plages de chaque bord étant destinées à adresser soit des segments soit des communs de la matrice dudit dispositif d'affichage, ladite matrice comportant plus de segments que de communs caractérisé en ce qu'il comporte des moyens de sélection destinés à permettre l'inversion des adressages desdits bords afin d'obtenir un circuit de commande unique adaptable à chaque dispositif d'affichage.

De plus, l'invention se rapporte à un dispositif d'affichage matriciel électro-optique comportant au moins une plaque de substrat inférieure de forme rectangulaire portant une couche électro-optique, une série de N électrodes transversales et une série de M électrodes longitudinales formant respectivement les segments et les communs d'une matrice d'affichage, ladite matrice comportant plus de segments que de communs, un circuit de commande selon la variante ci-dessus qui est fixé sur la plaque de substrat inférieure dont les plages de connexion sont raccordées aux deux séries d'électrodes par des pistes conductrices, une partie des plages de connexion étant dédiée à l'adressage des segments de la matrice et une autre partie des plages de connexion étant dédiée à l'adressage des communs de la matrice. Le dispositif est caractérisé en ce que, lorsque le circuit de commande est agencé sur une portion d'extrémité longitudinale de la plaque de substrat inférieure, les moyens de sélection dudit circuit de commande adresse les communs sur les plages de connexion du bord principal ou, lorsque le circuit de commande est agencé sur une portion d'extrémité transversale de la plaque de substrat inférieure, les segments, afin de simplifier lesdites pistes conductrices.

Le dispositif d'affichage ainsi réalisé permet de minimiser le nombre de plages de connexion dédiées à l'adressage des lignes sur le circuit de commande, ce qui permet d'utiliser un circuit de commande plus économique et consommant moins d'énergie et d'obtenir un dispositif d'affichage encore plus compact selon les directions transversales et longitudinales.

D'autres caractéristiques et avantages de la présente invention apparaîtront plus clairement à la lecture de la description détaillée qui suit, faite en référence aux dessins annexés donnés à titre d'exemple non limitatifs et dans lesquels :
- la figure 1 est une vue de dessus qui représente schématiquement un dispositif d'affichage selon l'état de la technique ;
- la figure 2 est une vue de dessus qui représente schématiquement un dispositif d'affichage réalisé conformément aux enseignements de l'invention selon un premier mode de réalisation ;
- la figure 3 est une vue en coupe longitudinale verticale qui représente schématiquement le dispositif d'affichage de la figure 2 ;
- la figure 4 est une vue en perspective avec arrachement qui représente schématiquement un deuxième mode de réalisation du dispositif d'affichage selon l'invention comportant une zone de raccordement vertical déportée vers le bord longitudinal de la plaque de substrat supérieure ;
- la figure 5 est une vue de dessus qui représente schématiquement le dispositif d'affichage de la figure 4 ;
- la figure 6 est une vue similaire à celle de la figure 5 qui représente schématiquement un quatrième mode de réalisation du dispositif d'affichage selon l'invention dans lequel une partie des pistes conductrices pour le raccordement des colonnes sont agencées sur la plaque supérieure ;
- la figure 7 est une vue similaire à celle de la figure 5 qui représente schématiquement un cinquième mode de réalisation du dispositif d'affichage selon l'invention comportant un circuit de commande amélioré.

Dans la suite de la description, des éléments similaires ou identiques seront désignés par les mêmes références.

Dans la suite de la description on utilisera, à titre non limitatif, des orientations verticale, longitudinale, et transversale conformément au repère V, L, T représenté sur les figures.

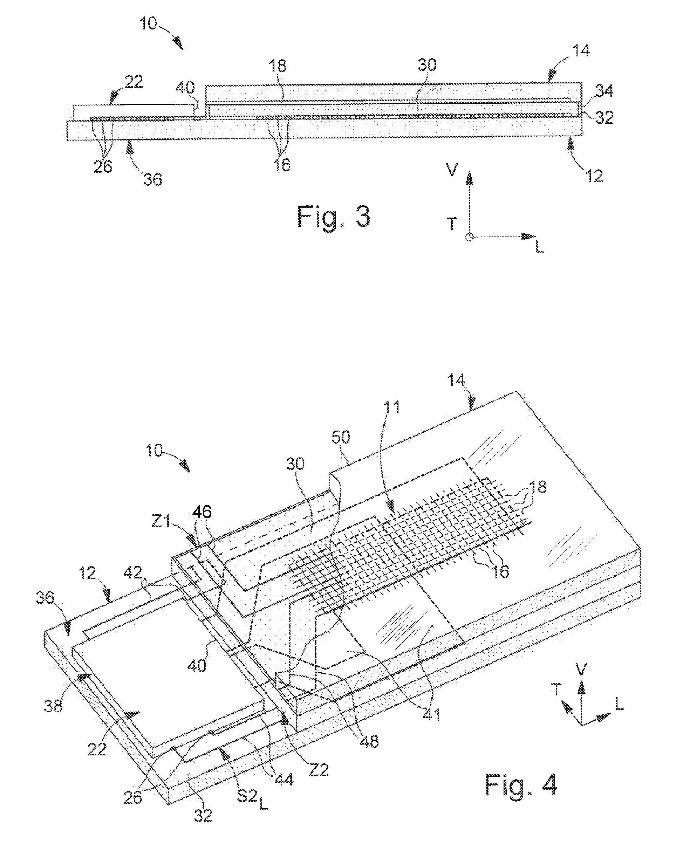

Sur les figures 2 et 3, on a représenté un dispositif d'affichage matriciel électro-optique 10 réalisé conformément aux enseignements de l'invention selon un premier mode de réalisation.

Le dispositif d'affichage 10 comporte une plaque de substrat inférieure 12 et une plaque de substrat supérieure 14 de formes globalement rectangulaires qui sont collées l'une contre l'autre de manière à emprisonner une couche électro-optique 30 constituée ici par une couche de cristaux liquides. Les longueurs des plaques 12, 14 s'étendent ici suivant la direction longitudinale et les largeurs des plaques 12, 14 s'étendent ici suivant la direction transversale.

Les faces internes 32, 34, c'est-à-dire les faces orientées vers la couche électro-optique 30, de la plaque inférieure 12 et de la plaque supérieure 14 portent respectivement une série de N électrodes transversales 16 et une série de M électrodes longitudinales 18 qui forment une matrice d'affichage 11.

Bien entendu, selon une variante de réalisation (non représentée), les électrodes transversales 16 peuvent être portées par la plaque supérieure 14 et les électrodes longitudinales 18 par la plaque inférieure 12.

De plus, la matrice d'affichage 11 peut être conçue pour être regardée, soit par le haut, à travers la plaque supérieure 14, soit par le bas, à travers la plaque inférieure 12.

A titre d'exemple, la matrice d'affichage 11 représentée comporte N=100 électrodes transversales 16 et M=20 électrodes longitudinales 18.

Chaque croisement d'une électrode transversale 16 avec une électrode longitudinale 18, dans la matrice 11, correspond ici à un pixel, de sorte que la matrice d'affichage 11 constitue une zone d'affichage active formée d'un quadrillage de pixels. Toutefois, l'invention s'applique aussi à une matrice d'affichage 11 comportant une ou plusieurs icônes physiques adressées de manière similaire à un pixel, c'est-à-dire par le croisement d'au moins une électrode transversale 16 avec une électrode longitudinale 18.

Conformément à la technologie dite « chip on glass » (COG), un circuit de commande 22 est fixé directement sur une portion 36 de la plaque de substrat inférieure 12, ici sur sa face interne 32, et ses plages de connexion 26 sont raccordées aux deux séries d'électrodes 16, 18 par des pistes conductrices 24. La portion 36 de la plaque inférieure 12 qui porte le circuit de commande 22 n'est pas recouverte par la plaque supérieure 14.

Conformément aux enseignements de invention, le circuit de commande 22 est agencé sur une portion 36 d'extrémité longitudinale de la plaque inférieure 12, ici l'extrémité gauche en considérant la figure 2.

Le circuit de commande 22 a globalement la forme d'une plaque rectangulaire comportant un bord principal 40 globalement transversal qui est agencé du côté de la matrice d'affichage 11. Le bord principal 40 est muni d'une série S_{C} de plages de connexion 26 dédiées à l'adressage des colonnes C.

Le circuit de commande 22 comporte, de part et d'autre du bord principal 40, une première série S1_{L} et une seconde série S2_{L} de plages de connexion 26 dédiées à l'adressage des lignes L. Selon le mode de réalisation représenté ici, les plages de connexion 26 de la première série S1_{L}, en haut sur la figure 2, sont dédiées à l'adressage des lignes 1 à M/2 et celles de la seconde série S2_{L}, en bas sur la figure 2, sont dédiées à l'adressage des lignes M/2 +1 à M.

On note qu'il est possible de n'utiliser que la première série S1_{L} de plages de connexion 26 si elle comporte un nombre suffisant de plages de connexion 26 pour adresser toutes les lignes L de la matrice d'affichage 11.

Selon une autre caractéristique de l'invention, les plages de connexion 26 adressant les colonnes C sont raccordées aux électrodes transversales 16 et les plages de connexion 26 adressant les lignes L sont raccordées aux électrodes longitudinales 18.

Les électrodes transversales 16 sont raccordées électriquement à la série S_{C} de plages de connexion 26 adressant les colonnes C par des pistes conductrices 41 agencées sur la face interne 32 de la plaque inférieure 12.

Selon le mode de réalisation représenté ici, une première série S1_{C} de plages de connexion 26 adressant la moitié des colonnes C est raccordée aux électrodes transversales 16 d'un côté de la matrice 11, en bas sur la figure 2, et une seconde série S2_{C} de plages de connexion 26 adressant l'autre moitié des colonnes C est raccordée aux électrodes transversales 16 de l'autre coté de la matrice 11, en haut sur la figure 2.

Ce type de raccordement permet notamment de répartir l'encombrement transversal dû aux pistes conductrices 41 de part et d'autre de la matrice 11.

Pour permettre le raccordement électrique des plages de connexion 26 adressant les lignes L, qui sont portées par la plaque inférieure 12, avec les électrodes longitudinales 18, qui sont portées par la plaque supérieure 14, il est prévu une première Z1 et une seconde Z2 zones de raccordement vertical agencées au voisinage du bord périphérique de la plaque supérieure 14. Ces zones de raccordement vertical Z1, Z2 comportent ici une colle conductrice anisotrope qui conduit le courant électrique uniquement verticalement. Cette colle est disposée sur tout le bord périphérique de la plaque supérieure 14 pour fixer la plaque supérieure 14 sur la plaque inférieure 12. La colle est rendue conductrice anisotrope par exemple au moyen de billes conductrices. Cette technologie de raccordement peut être appelée « contact in seal ».

Bien entendu, les zones de raccordement vertical Z1, Z2 peuvent être réalisées par d'autres moyens, par exemple par des points de contact agencés de manière adéquate.

Chacune des zones de raccordement vertical Z1, Z2 s'étend ici sur un segment transversal du bord périphérique de la plaque supérieure 14, à la limite entre la plaque supérieure 14 et la portion d'extrémité longitudinale 36 non recouverte de la plaque inférieure 12.

Une première série de pistes conductrices inférieures 42 est agencée sur la face interne 32 de la plaque inférieure 12 de manière à raccorder électriquement la première série S1_{L} de plages de connexion 26 adressant les lignes L avec la première zone de raccordement vertical Z1.

Une seconde série de pistes conductrices inférieures 44 est agencée sur la face interne 32 de la plaque inférieure 12 de manière à raccorder électriquement la seconde série S2_{L} de plages de connexion 26 adressant les lignes L avec la seconde zone de raccordement vertical Z2.

De manière similaire, une première série de pistes conductrices supérieures 46 est agencée sur la face interne 34 de la plaque supérieure 14 de manière à raccorder électriquement les électrodes longitudinales 18 correspondant aux lignes 1 à M/2 avec la première zone de raccordement vertical Z1.

Une seconde série de pistes conductrices supérieures 48 est agencée sur la face interne 34 de la plaque supérieure 14 de manière à raccorder électriquement les électrodes longitudinales 18 correspondant aux lignes M/2 +1 à M avec la seconde zone de raccordement vertical Z2.

On note que, pour faciliter la compréhension des schémas, les pistes conductrices 41, 42, 44, 46, 48 et les plages de connexion 26 ont été représentées partiellement.

On constate que les pistes conductrices 41 liées aux colonnes C croisent les pistes conductrices 46, 48 liées aux lignes L en dehors de la matrice d'affichage 11. Ces croisements sont possibles, sans problème de court-circuit, car ils se produisent dans une zone où les pistes conductrices 46, 48 liées aux lignes L sont portées par la plaque supérieure 14. Ces croisements peuvent provoquer l'activation de pixels dans les cristaux liquides, en dehors de la matrice d'affichage 11. Toutefois, cette activation n'est pas pénalisante car elle se produit en dehors de la zone d'affichage active constituée par la matrice 11.

Le dispositif d'affichage 10 obtenu selon le premier mode de réalisation présente notamment l'avantage d'être particulièrement compact dans le sens de sa largeur, ici selon la direction transversale. De plus, il est compatible avec un circuit de commande 22 classique, c'est-à-dire du type utilisé dans les dispositifs d'affichage selon l'état de la technique, ce qui permet de minimiser les coûts de fabrication et de référencement.

D'autres modes de réalisation du dispositif d'affichage 10 selon l'invention vont maintenant être présentés. Ces modes de réalisation seront décrits principalement en fonction de leurs différences par rapport au premier mode de réalisation.

En se reportant à la figure 2 qui représente le premier mode de réalisation, on constate que les plages de connexion 26 adressant les lignes 1 à M/2 sont raccordées à une première moitié des électrodes longitudinales 18, respectivement depuis l'électrode 18 intérieure jusqu'à l'électrode 18 extérieure, alors que les plages de connexion adressant les lignes M/2 +1 à M sont raccordées à une seconde moitié des électrodes longitudinales 18, respectivement depuis l'électrode 18 intérieure jusqu'à l'électrode 18 extérieure. Par conséquent, l'ordre des plages de connexion 26 adressant les lignes L ne suit pas l'ordre physique des électrodes longitudinales 18 dans la matrice 11 ce qui rend la programmation du circuit de commande 22 plus difficile.

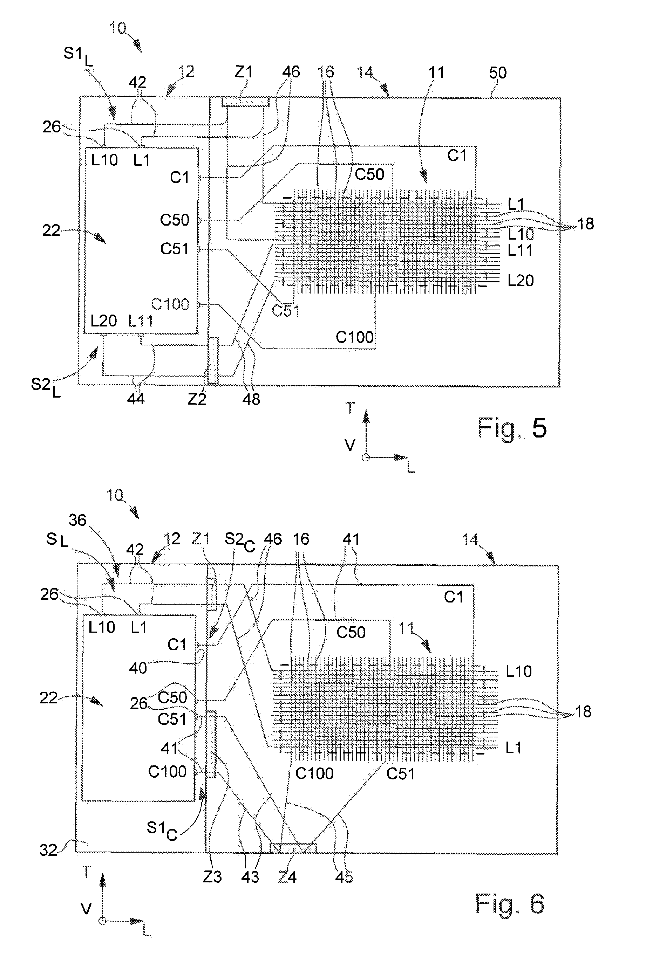

Le deuxième mode de réalisation du dispositif d'affichage 10 selon l'invention, qui est représenté sur les figures 4 et 5, remédie à cet inconvénient en proposant un dispositif d'affichage 10 dans lequel la première zone de raccordement vertical Z1 ne s'étend plus transversalement mais longitudinalement le long du bord périphérique de la plaque supérieure 14.

Ainsi, la première série S1_{L} de pistes conductrices inférieures 42 se prolonge sous la plaque supérieure 14 de manière à atteindre le bord longitudinal 50 le plus proche de la plaque supérieure 14, où est située la première zone de raccordement vertical Z1. Les pistes conductrices supérieures 46 associées partent depuis ce bord longitudinal 50 vers les électrodes longitudinales 18 correspondantes, avec un ordre inversé par rapport au premier mode de réalisation.

Grâce à cette configuration, les plages de connexion 26 adressant les lignes 1 à M/2 sont raccordées dans l'ordre croissant aux électrodes longitudinales 18, depuis l'extérieur vers l'intérieur de la matrice d'affichage 11.

Selon un troisième mode de réalisation (non représenté) de l'invention, le circuit de commande 22 comporte un dispositif d'inversion qui est commandé pour inverser l'ordre de la première série S1_{L} de plages de connexion 26 adressant les lignes 1 à M/2, ce qui permet de faire correspondre l'ordre des plages de connexion 26 adressant les lignes L avec l'ordre physique des électrodes longitudinales 18 dans la matrice 11.

Avantageusement, le circuit de commande 22 comporte aussi un dispositif d'inversion qui est commandé pour inverser l'ordre des plages de connexion 26 adressant les colonnes N/2 +1 à N, ce qui permet de faire correspondre aussi l'ordre des plages de connexion 26 adressant les colonnes C avec l'ordre physique des électrodes transversales 16 dans la matrice 11.

De préférence, ces dispositifs d'inversion sont réalisés au moyens de composants électroniques intégrés dans le circuit de commande 22 et peuvent être commandés dans un mode inversé et dans un mode normal, ce qui permet d'utiliser le circuit de commande 22 dans un dispositif d'affichage 10 ne nécessitant pas une inversion de l'ordre des plages de connexion 26.

Sur la figure 6, on a représenté un quatrième mode de réalisation du dispositif d'affichage 10 selon l'invention dans lequel l'ordre d'adressage de la première série S1_{C} de plages de connexion 26 adressant les colonnes N/2 +1 à N a été inversé en les raccordant aux électrodes transversales 16 correspondantes en passant par la plaque supérieure 14.

Les pistes conductrices 41 relient les plages de connexion 26 de la première série S1_{C} à une troisième zone de raccordement vertical Z3 qui s'étend transversalement. Cette troisième zone de raccordement vertical Z3 est reliée, par des pistes conductrices 43 portées par la plaque supérieure 14, à une quatrième zone de raccordement vertical Z4, qui s'étend longitudinalement et qui permet de faire redescendre les données d'adressage sur la plaque inférieure 12, où des pistes conductrices 45 font la liaison avec les électrodes transversales 16 correspondantes.

L'inversion de l'ordre d'adressage des plages de connexion 26 de la première série S1_{C} est réalisée suivant le même principe que celui qui a été utilisé dans le cadre du deuxième mode de réalisation (figure 5), pour inverser l'ordre d'adressage de la première série S1_{L} de plages 26 adressant les lignes L.

Bien entendu, les plages de connexion 26 de la seconde série S2_{C} adressant les colonnes C sont raccordées aux électrodes transversales 16 correspondantes comme dans les modes de réalisation décrits précédemment, sans passer par la plaque supérieure 14.

Selon ce quatrième mode de réalisation, la matrice 11 ne comporte que dix lignes L qui sont adressées par une seule série S_{L} de plages de connexion 26 adressant les lignes L, situées d'un seul côté des plages de connexion 26 adressant les colonnes C. Ces plages de connexion 26 sont raccordées aux électrodes longitudinales 18 par l'intermédiaire d'une seule zone de raccordement vertical Z1, de sorte qu'il n'est pas nécessaire d'inverser l'ordre d'adressage comme dans le deuxième mode de réalisation (figure 5).

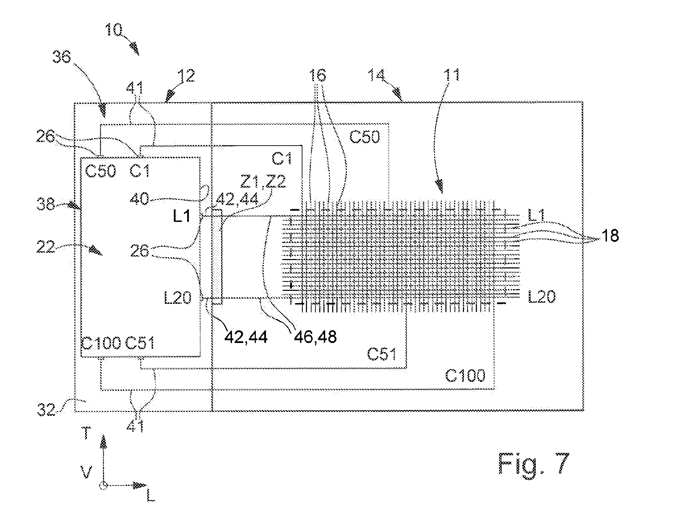

Selon un cinquième mode de réalisation du dispositif d'affichage 10 selon l'invention, qui est représenté sur la figure 7, celui-ci est équipé d'un circuit de commande 22 comportant les plages de connexion 26 dédiées à l'adressage des lignes L sur son bord principal 40, les plages de connexion 26 dédiées à l'adressage des colonnes C étant réparties ici sur les bords longitudinaux du circuit de commande 22, de part et d'autre du bord principal 40.

Comme pour les modes de réalisation précédents, les plages de connexion 26 adressant les colonnes C sont raccordées aux électrodes transversales 16 et les plages de connexion 26 adressant les lignes L sont raccordées aux électrodes longitudinales 18.

On note que les pistes conductrices inférieures 42, 44 peuvent être raccordées aux pistes conductrices supérieures 46, 48 au sein d'une même zone de raccordement vertical Z1, Z2.

Ce mode de réalisation permet d'obtenir un dispositif d'affichage 10 encore plus compact, à la fois dans la direction longitudinale et dans la direction transversale, grâce à un schéma de raccordement des pistes conductrices plus simple qui évite les croisements de pistes conductrices 41, 42, 44, 46, 48 en dehors de la matrice d'affichage 11.

De plus, ce mode de réalisation permet de faire correspondre l'ordre de toutes les plages de connexion 26 avec l'ordre physique des électrodes transversales 16 et longitudinales 18 dans la matrice 11.

Selon une variante du cinquième mode de réalisation, le circuit de commande 22 comporte des moyens électroniques qui rendent les plages de connexion 26 agencées sur le bord principal 40 aptes à l'adressage des colonnes C de la matrice 11 et qui rendent les plages de connexion 26 agencées sur les bords longitudinaux aptes à l'adressage des lignes L de la matrice 11. De plus, le circuit de commande 22 comporte des moyens de sélection qui sont commandés pour affecter à chaque série de plages de connexion 26 un type d'adressage dédié déterminé.

Les moyens de sélection comportent par exemple deux états un premier état dans lequel les plages de connexion 26 du bord principal 40 sont dédiées à l'adressage des colonnes C, les autres plages de connexion 26 adressant les lignes L, et un second état dans lequel les plages de connexion 26 du bord principal 40 sont dédiées à l'adressage des colonnes L, les autres plages de connexion 26 adressant les lignes C.

Pour la réalisation du dispositif d'affichage 10 de la figure 7, les moyens de sélection sont alors commandés dans le second état.

## Revendications

1. Circuit de commande (22) pour la réalisation d'un dispositif d'affichage (10) comportant des plages de connexion (26) distribuées sur un bord principal (40) et sur au moins un bord adjacent audit bord principal, lesdites plages de chaque bord étant destinées à adresser soit des segments (C) soit des communs (L) de la matrice (11) dudit dispositif d'affichage, ladite matrice comportant plus de segments (C) que de communs (L) **caractérisé en ce qu'**il comporte des moyens de sélection destinés à permettre l'inversion des adressages desdits bords afin d'obtenir un circuit de commande (22) unique adaptable à chaque dispositif d'affichage.

2. Dispositif d'affichage matriciel électro-optique (10) comportant au moins une plaque de substrat inférieure (12) de forme rectangulaire portant une couche électro-optique (30), une série de N électrodes transversales (16) et une série de M électrodes longitudinales (18) formant respectivement les segments (C) et les communs (L) d'une matrice d'affichage (11), ladite matrice comportant plus de segments (C) que de communs (L), un circuit de commande (22) selon la revendication 1 qui est fixé sur la plaque de substrat inférieure (12) dont les plages de connexion (26) sont raccordées aux deux séries d'électrodes (16, 18) par des pistes conductrices (41, 42, 44, 46, 48), une partie (S_{C}) des plages de connexion (26) étant dédiée à l'adressage des segments (C) de la matrice (11) et une autre partie (S1_{L}, S2_{L}) des plages de connexion (26) étant dédiée à l'adressage des communs (L) de la matrice (11), **caractérisé en ce que**, lorsque le circuit de commande (22) est agencé sur une portion d'extrémité longitudinale (36) de la plaque de substrat inférieure (12), les moyens de sélection dudit circuit de commande adresse les communs (L) sur les plages de connexion (26) du bord principal (40) afin de simplifier lesdites pistes conductrices.

3. Dispositif d'affichage matriciel électro-optique (10) comportant au moins une plaque de substrat inférieure (12) de forme rectangulaire portant une couche électro-optique (30), une série de N électrodes transversales (16) et une série de M électrodes longitudinales (18) formant respectivement les segments (C) et les communs (L) d'une matrice d'affichage (11), ladite matrice comportant plus de segments (C) que de communs (L), un circuit de commande (22) selon la revendication 1 qui est fixé sur la plaque de substrat inférieure (12) dont les plages de connexion (26) sont raccordées aux deux séries d'électrodes (16, 18) par des pistes conductrices (24), une partie (S_{C}) des plages de connexion (26) étant dédiée à l'adressage des segments (C) de la matrice (11) et une autre partie (S1_{L}, S2_{L}) des plages de connexion (26) étant dédiée à l'adressage des communs (L) de la matrice (11), **caractérisé en ce que**, lorsque le circuit de commande (22) est agencé sur une portion d'extrémité transversale (20) de la plaque de substrat inférieure (12), les moyens de sélection dudit circuit de commande adresse les segments (C) sur les plages de connexion (26) du bord principal (40) afin de simplifier lesdites pistes conductrices.
